# EUROPÄISCHE PATENTANMELDUNG

(11) **EP 2 735 399 A1**
(43) Veröffentlichungstag der Anmeldung: **28.05.2014**
(21) Anmeldenummer: 12194003.5
(22) Anmeldetag: 23.11.2012
(51) Int. Cl.: B23P 6/04, B23K 1/00, B23K 9/04, B23K 26/34, F01D 5/00

(54) **Bestimmung der Verfahrrichtung bei der Schweißung eines gerichtet erstarrten Werkstoffs**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE)

(57) **Zusammenfassung**

Durch die Bestimmung der kristallographischen Orientierung einer gerichtet erstarrten Struktur entfernt von einer zu reparierenden Stelle kann auf die kristallographische Orientierung an dieser Stelle geschlossen werden. Dadurch entfällt die Notwendigkeit, die zu reparierende Stelle selbst durch äussere Eingriffe zu stören. Ein weiterer Anwendungsfall liegt vor, wenn die zu reparierende Stelle aufgrund ihrer geometrischen Anordnung im Bauteil schlecht zugänglich ist.

## Beschreibung

Die Erfindung betrifft die Bestimmung der Verfahrrichtung beim Schweißen von gerichtet erstarrten Werkstoffen.

Es ist bekannt Bauteile zwecks Reparatur zu schweißen, bei dem auch neues Material aufgebracht wird. Komplizierter ist dies bei Bauteilen, die eine gerichtete Struktur aufweisen, wie es von nickelbasierten Superlegierungen bekannt ist, die kolumnare Körner oder eine einkristalline Struktur aufweisen.

Aus der WO 2009/144077 A1 ist bekannt, dass es wichtig ist die Vorzugsrichtung beim Schweißen bei der Verfahrrichtung zu berücksichtigen. Dies ist jedoch oft auf der Zugänglichkeit der zu schweißenden Stellen, z.B. krumme Flächen, wie bei der Filet-Region (dem Übergang zwischen Schaufelplattform und Schaufelblatt einer Turbinenschaufel) nicht immer möglich.

Es ist daher Aufgabe der Erfindung ein Verfahren aufzuzeigen, mit dem die Verlaufsrichtung beim Schweißen von gerichtet erstarrten Struktur einfach bestimmt werden kann.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Bauteil, an dem beispielhaft gezeigt wird, wie die Erfindung durchzuführen ist,
- Figur 2: eine Turbinenschaufel.

Die Figuren und die Beschreibung stellen nur Ausführungsbeispiele der Erfindung dar.

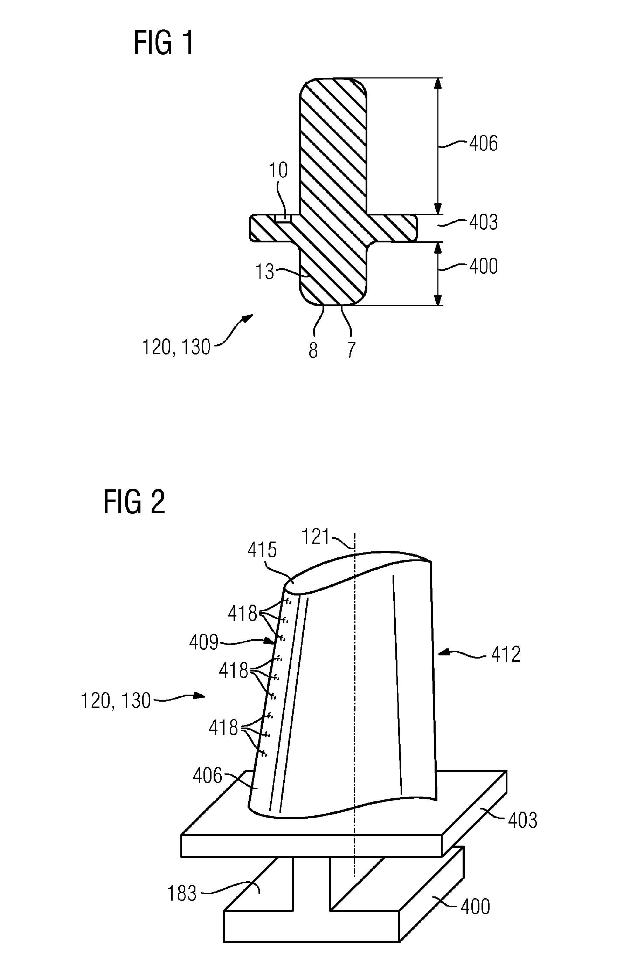

In Figur 1 ist ein beispielhaftes Bauteil, eine Turbinenschaufel 120, 130 gezeigt (Fig. 2).

Die Turbinenschaufel 120, 130 weist ein Schaufelfuß 400 auf, an dem sich eine Schaufelplattform 403 anschließt, an die sich wiederum das Schaufelblatt 406 anschließt (Fig. 2). Der Schaufelfuß 400 weist eine Stirnseite 7 auf.

Mit dem Bezugszeichen 10 (= Schweißstelle) ist ein beispielhafter Bereich auf der Oberseite der Schaufelplattform 403 markiert und die dem Schaufelblatt 406 direkt gegenüberliegt, die vorzugsweise auftragsgeschweißt werden soll.

Für die Verfahrrichtung beim Schweißen muss die Orientierung 13 der gerichtet erstarrten Struktur (Vorzugsrichtung) des Bauteils 120, 130 berücksichtigt werden, d.h. der Winkel zwischen einer senkrechten Oberfläche und der Orientierung der kristallinen Struktur des Bauteils 120, 130 in dem Bereich 10.

Die gerichtet erstarrte Struktur kann eine kolumnare oder eine einkristalline Struktur sein.

Erfindungsgemäß wird an eine von dem Bereich 10 entfernte Stelle 8, hier an der Stirnseite 7 des Schaufelfußes 400, untersucht, insbesondere durch anätzen, so dass dort 8 die Orientierung 13 der gerichtete erstarrten Struktur bzw. Mittelachse des Bauteils bestimmt werden kann. Die Stelle 8 kann großflächig angeätzt werden, damit auch das Korn, das durch die zu schweißende Stelle verläuft, gefunden werden kann.

Durch den leicht zu bestimmenden oder bekannten Abstand von der untersuchten Fläche 8 zu der zu schweißenden Stelle 10 bzw. durch den parallelen Verlauf benachbarter kolumnarer Körner kann auf die Orientierung 13 der Kornstruktur an der Schweißstelle 10 geschlossen werden und entsprechend die Verfahrrichtung festgelegt werden.

Die abschleifende oder ätzende Untersuchung ist nur an einer entfernt gelegenen Stelle 8 möglich, weil durch diese Untersuchungsmethoden wiederum die Oberfläche beeinflusst wird, was bei gewünschten Reparaturverfahren wie gerichtetes Löten oder gerichtetes Schweißen nicht möglich ist oder ein erneutes Überarbeiten der Schweißstelle erfordern würde.

Die bearbeitete Stelle 8 muss nicht überarbeitet werden, wenn das Bauteil 120, 130 zum Einsatz kommt.

Auch spielt es vorzugsweise keine Rolle, ob die Oberflächennormalen der Schweißstelle 10 und der Stelle 7 entgegengesetzt verlaufen.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Festlegung der Verfahrrichtung beim Schweißen einer Schweißstelle (10) einer gerichtet erstarrten Struktur (13),
bei dem an einer von der Schweißstelle (10) entfernten Stelle (8) die Orientierung (13) der gerichtet erstarrten Struktur bestimmt wird und
durch geometrische Überlegungen und/oder Berechnungen die Orientierung der Struktur (13) an der zu reparierenden Stelle (10) bestimmt wird.

2. Verfahren nach Anspruch 1,
bei dem das Bauteil eine Turbinenschaufel (120, 130) ist und
bei dem die Orientierung (13) der gerichtet erstarrten Struktur (13) am radialen Ende (7) des Befestigungsbereichs (400) bestimmt wird und
insbesondere die Schweißstelle (10) sich auf der Oberseite der Schaufelblattform (403) oder im Übergangsbereich zum Schaufelblatt (406) befindet.

3. Verfahren nach einem oder beiden der Ansprüche 1 oder 2, bei dem das Bauteil (120, 130) eine kolumnare Struktur aufweist.

4. Verfahren nach einem oder beiden der Ansprüche 1 oder 2, bei dem das Bauteil (120, 130) eine einkristalline Struktur aufweist.

5. Verfahren nach einem oder mehreren der vorherigen Ansprüche 1 bis 4,
bei dem eine Auftragsschweißung durchgeführt wird.

6. Verfahren nach einem oder mehreren der Ansprüche 1 bis 4,
bei dem ein Umschmelzen durchgeführt wird.

7. Verfahren nach einem oder mehreren der vorherigen Ansprüche 1 bis 4,
bei dem eine Lötreparatur mit gerichteter Erstarrung durchgeführt wird.

8. Verfahren nach einem oder mehreren der vorherigen Ansprüche 1 bis 7,
bei dem die Stelle (8) angeätzt wird.
